# EUROPÄISCHE PATENTANMELDUNG

(11) **EP 0 582 867 A1**
(43) Veröffentlichungstag der Anmeldung: **16.02.1994**
(21) Anmeldenummer: 93111686.7
(22) Anmeldetag: 21.07.1993
(51) Int. Cl.: B01D 53/36

(54) **Rauchgas-Reinigungseinrichtung**

(30) Priorität: 03.08.1992 DE 4225572
(71) Anmelder: SIEMENS AKTIENGESELLSCHAFT, D-80333 München (DE)
(72) Erfinder: Balling, Lothar Dipl.-Ing., D-90765 Fürth (DE); Hüttenhofer, Klaus Dipl.-Ing., D-90562 Heroldsberg (DE); Sigling, Ralf Dipl.-Ing., D-91083 Baiersdorf (DE); Leisegang, Lutz Dipl.-Ing., D-45770 Marl (DE)

(57) **Zusammenfassung**

Zur Verlängerung der Lebensdauer eines DeNOₓ-Katalysators (10, 26) und zur Senkung der Betriebskosten für die Verminderung der Stickoxide im Rauchgas einer Verbrennungsanlage ist erfindungsgemäß vorgesehen, daß die Einrichtung (6, 24) zur Adsorption von Schadstoffen einen Reaktor für eine Schüttung aus einem festen Adsorbermaterial (34, 38) umfaßt und dem DeNOₓ-Katalysator (10, 26) in Strömungsrichtung des Rauchgases in einer Rauchgasleitung (2) vorgeschaltet ist, und daß der DeNOₓ-Katalysator (10, 26) konstruktiv wie ein Reaktor zur Aufnahme einer Schüttung aus einem festen Adsorbermaterial (34, 38) ausgebildet ist. Aufgrund der auf diese Weise erreichten vollständigen Adsorption von Schwefeldioxid kann die Betriebstemperatur des DeNOₓ-Katalysators (10, 26) auf 100 bis 250° C gesenkt werden.

Die erfindungsgemäß vorgeschlagene Rauchgas-Reinigungseinrichtung kann in die Rauchgasleitung einer Verbrennungsanlage eingebaut werden.

## Beschreibung

Die Erfindung bezieht sich auf eine Rauchgas-Reinigungseinrichtung mit einer Einrichtung zur Adsorption von Schadstoffen im Rauchgas und mit einem DeNOₓ-Katalysator zur Verminderung von Stickoxiden im Rauchgas.

Zur Verminderung von Stickoxiden im Rauchgas ist es bekannt, die Stickoxide nach dem Verfahren der selektiven katalytischen Reduktion (SCR) durch Kontaktierung mit DeNOₓ-Katalysatormaterial - bei gleichzeitiger Anwesenheit eines Reduktionsmittels, meist Ammoniak - katalytisch zu Stickstoff und Wasser umzusetzen. Für den Einsatz eines DeNOₓ-Katalysators in Form eines üblichen Waben- oder Plattenkatalysators ist allerdings ein hoher Aufwand bezüglich seiner Installation in einer Rauchgasleitung erforderlich.

Mit fortschreitender Einsatzdauer wird das Material des DeNOₓ-Katalysators durch Schadstoffe im Rauchgas, wie z. B. Schwermetall-Verbindungen, Silikate, Phosphate und Erd- und Alkali-Verbindungen, desaktiviert. Insbesondere bei in der Rauchgasleitung einer Müllverbrennungsanlage eingebautem DeNOₓ-Katalysator oder bei einem DeNOₓ-Katalysator, der in einer Rauchgasleitung in Strömungsrichtung des Rauchgases vor einer Rauchgasentschwefelungseinrichtung (REA) eingebaut ist, schreitet diese Desaktivierung aufgrund des hohen Schadstoffgehaltes im Rauchgas schnell voran. Daher ist ein häufiges Austauschen des DeNOₓ-Katalysatormaterials erforderlich, was kostenintensiv ist. Zudem ist es für die ordnungsgemäße Funktion des DeNOₓ-Katalysators wichtig, seine Betriebstemperatur oberhalb von etwa 270 °C zu halten, wenn der DeNOₓ-Katalysator von SO₂/SO₃-haltigem Rauchgas durchströmt wird. Bei einer Unterschreitung der Temperatur von 270 °C würden sich sonst Ammonsulfate im Rauchgas bilden, die die Poren des DeNOₓ-Katalysatormaterials verstopfen und den Katalysator somit desaktivieren.

Wird der DeNOₓ-Katalysator dagegen hinter der REA positioniert, so sind hohe Betriebskosten zur Wiederaufheizung des Rauchgases erforderlich. Der zur Aufheizung des Rauchgases erforderliche Wärmetauscher verursacht zudem hohe Investitionskosten und einen hohen Druckabfall in der Rauchgasleitung. Dafür ist aber eine längere Haltbarkeit des DeNOₓ-Katalysatormaterials gewährleistet.

Der Erfindung liegt daher die Aufgabe zugrunde, eine Rauchgasreinigungseinrichtung der eingangs genannten Art anzugeben, die es erlaubt, die Stickoxide in schadstoffbeladenem Rauchgas mit besonders geringen Investistions- und Betriebskosten und dennoch mit ausreichend hohen Abscheidegraden katalytisch umzusetzen.

Diese Aufgabe wird erfindungsgemäß dadurch gelöst, daß die Einrichtung zur Adsorption von Schadstoffen einen Reaktor für eine Schüttung aus einem festen Absorbermaterial umfaßt und dem DeNOₓ-Katalysator in Strömungsrichtung des Rauchgases in einer Rauchgasleitung vorgeschaltet ist, wobei der DeNOₓ-Katalysator konstruktiv wie ein Reaktor zur Aufnahme einer Schüttung aus einem festen Adsorbermaterial ausgebildet ist.

Durch die Kontaktierung des Rauchgases mit einem Adsorbermaterial vor dem Eintritt in den DeNOₓ-Katalysator werden katalysatorschädigende Stoffe, wie Arsen-, Blei-, Quecksilber-, Nickel-, Silizium-, Phosphor- und Selen-Verbindungen, sowie andere Verbindungen, wie Natrium- und Kalium-Verbindungen, und der Restgehalt von SO₂/SO₃ aus dem Rauchgas abgeschieden, wodurch die Lebensdauer des DeNOₓ-Katalysators deutlich erhöht wird. Damit werden die Zeitintervalle für einen Katalysatoraustausch deutlich verlängert. Ein weiterer positiver Aspekt dieser Lösung ist die Abscheidung von gegebenenfalls vorhandenen Dioxinen, Furanen und anderen Kohlenwasserstoff-Verbindungen am Adsorbermaterial. Außerdem darf nunmehr die zum Betrieb des DeNOₓ-Katalysators notwendige Temperatur relativ niedrig sein, z. B. 170 °C, da nun nicht mehr die Gefahr besteht, daß Ammonsulfate den DeNOₓ-Katalysator schädigen. Weiterhin ist zur Aufnahme des DeNOₓ-Katalysatormaterials nun als Reaktor ein preiswertes Standardsystem vorgesehen, wie es beispielsweise in der Industrie üblicherweise als Aktivkohle- oder Koksadsorber verwendet wird.

In vorteilhafter Weise kann die Temperatur des Rauchgases während der Kontaktierung mit dem Adsorbermaterial und dem DeNOₓ-Katalysatormaterial zwischen 100 und 250 °C liegen. Dadurch wird ein Teil oder die komplette Heizleistung zur Wiederaufheizung des Rauchgases nach einer REA bei gleichzeitig ausreichend hohen Abscheidegraden der Schadstoffe eingespart.

Zur Minimierung des konstruktiven Aufwandes und der Kosten bezüglich des DeNOₓ-Katalysators ist es vorteilhaft, wenn das Material des DeNOₓ-Katalysators in Form von Pellets oder als Granulat, insbesondere ähnlich der Geometrie des vorgeschalteten Adsorbermaterials, vorliegt. Hierbei kann die Anströmgeschwindigkeit des Rauchgases auf etwa 0,5 m/s reduziert werden, wohingegen die Anströmgeschwindigkeiten bei der Verwendung üblicher Waben- oder Plattenkatalysatoren bei 4 bis 6 m/sec liegt. Außerdem kann beispielsweise grob zerkleinertes Katalysatormaterial aus Produktionsausschuß oder grob zerkleinertes, verbrauchtes Katalysatormaterial als Granulat weiter- bzw. wiederverwendet werden.

Zur guten katalytischen Umsetzung der Stickoxide am Material des DeNOₓ-Katalysators in einem Reaktor, der beispielsweise wie ein Aktivkohle- oder Koksadsorber aufgebaut ist, können Pellets insbesondere mit einem Durchmesser von 4 bis 5 mm und einer Länge von 5 bis 20 mm verwendet sein.

Ein Vorteil dieser Geometrie ist auch, daß das verbrauchte Katalysatormaterial in geringen Mengen kontinuierlich aus dem Reaktor entnommen und neues Material nachgefüllt werden kann. Damit entfallen die bei bisherigen, konventionellen Reaktorkonstruktionen notwenidigen Stillstandzeiten der Gesamtanlage für den Austausch der Katalysatoren.

Zwei Ausführungsbeispiele der Erfindung werden anhand der Zeichnung näher erläutert. Dabei zeigen:
- Figur 1: eine schematische Darstellung des Ausschnittes einer ersten Verbrennungsanlage mit einer erfindungsgemäßen Rauchgas-Reinigungseinrichtung; und
- Figur 2: eine schematische Darstellung des Ausschnittes einer zweiten Verbrennungsanlage mit einer erfindungsgemäßen Rauchgas-Reinigungseinrichtung.

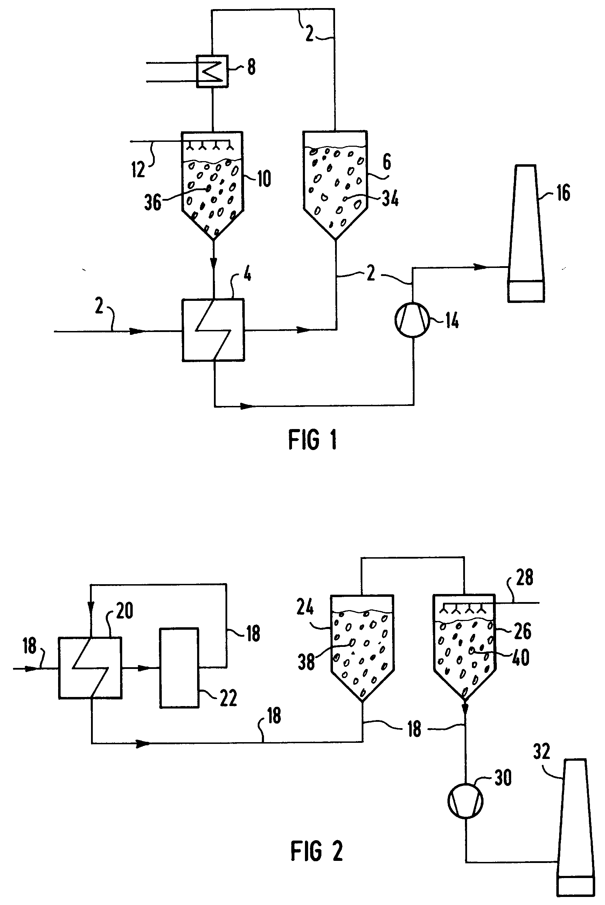

Nach Figur 1 sind in einer Rauchgasleitung 2 einer ersten Verbrennungsanlage, z. B. einer Müllverbrennungsanlage nach dem Schwelbrennverfahren, der Reihe nach ein Gas/Gas-Wärmetauscher 4, eine Einrichtung 6 zur Adsorption von Schadstoffen, ein Wärmetauscher 8, ein DeNOₓ-Katalysator 10 mit eingebauter Ammoniak-Eindüsvorrichtung 12, ein Saug-Zug-Gebläse 14 und ein Kamin 16 angeordnet. Beim Betrieb der Verbrennungsanlage strömt das zuvor in einer (nicht gezeigten) Filter- und Rauchgas-Wascheinrichtung gefilterte und gewaschene Rauchgas mit einer Temperatur von etwa 65° C primärseitig in den Gas/-Gas-Wärmetauscher 4. Das Rauchgas enthält hier, also nach der Filterung und der Rauchgaswäsche, u. a. z. B. 50 mg/Nm³ Schwefeldioxid, 500 mg/Nm³ Stickoxide, 0,1 mg/Nm³ Quecksilber, 10 mg/Nm³ Staub und Kohlenwasserstoff-Verbindungen, die einem Toxizitätsäquivalent (TE) von 5 ng/Nm³ entsprechen. Beim primärseitigen Durchströmen des Gas/Gas-Wärmetauschers 4 wird das Rauchgas auf im Ausführungsbeispiel 150 °C aufgeheizt. Die hierzu benötigte Wärmemenge wird dem mit einer Temperatur von etwa 200° C aus dem DeNOₓ-Katalysator 10 strömenden Rauchgas auf der Sekundärseite des Gas/-Gas-Wärmetauschers 4 entzogen.

Mit unveränderter Schadstoffbelastung strömt das Rauchgas vom Gas/Gas-Wärmetauscher 4 in die Einrichtung 6 zur Adsorption von Schadstoffen. Die Einrichtung 6 ist im Ausführungsbeispiel ein Gegenstromadsorber, in dem als wirksames Adsorbermaterial Aktivkohle 34 eingesetzt ist. Dieser Gegenstromadsorber ist beispielsweise als preiswertes Standardsystem im Handel erhältlich. In dem Gegenstromadsorber wird die Schadstoffbelastung des Rauchgases gesenkt, und zwar z. B. für Schwefeldioxid um ein Faktor 10 auf kleiner 5 mg/Nm³, für Quecksilber um einen Faktor 2 auf etwa 0,05 mg/Nm³, für das Toxizitätsäquivalent um einen Faktor 50 auf etwa 0,1 ng/Nm³ bei etwa gleichbleibender Stickoxid- und Staubbelastung.

Mittels des im Ausführungsbeispiel mit Dampf beheizten Wärmetauschers 8 wird das Rauchgas in Strömungsrichtung des Rauchgases hinter der Einrichtung 6 auf eine Temperatur von etwa 200° C aufgeheizt. Mit dieser Temperatur strömt es in den DeNOₓ-Katalysator 10. Mit der Ammoniakeindüsvorrichtung 12 wird dem Rauchgas vor der Kontaktierung mit dem DeNOₓ-Katalysatormaterial 36 Ammoniak (NH₃) zugeführt. Als DeNOₓ-Katalysatormaterial 36 wird im Ausführungsbeispiel eine Schüttung von Katalysator-Pellets verwendet, die auf der Basis von Titandioxid mit Zusätzen von z. B. Vanadiumpentoxid, Eisentrioxid und/oder Eisensulfat zusammengesetzt sind. Die Pellets besitzen im Ausführungsbeispiel einen Durchmesser von etwa 5 mm und eine Länge von etwa 10 mm. Auf Zusatzstoffe, wie z. B. Wolframtrioxid oder Molybdäntrioxid, kann verzichtet werden, da bei der Betriebstemperatur unterhalb 200 °C eine Rutilisierung des Titandioxids unwahrscheinlich ist. Als Reaktor zur Aufnahme der Schüttung wird der gleiche Gegenstromadsorber verwendet, wie er schon in der Einrichtung 6 zur Aufnahme der Aktivkohleschüttung vorgesehen ist.

Nach dem Durchströmen des DeNOₓ-Katalysators 10 ist die Belastung des Rauchgases durch Stickoxide, da diese im DeNOₓ-Katalysator 10 weitgehend katalytsich zu Stickstoff und Wasser umgesetzt worden sind, z. B. um einen Faktor 7 auf nunmehr kleiner 70 mg/Nm³ Rauchgas gesunken. Dem nun weitgehend schadstofffreien Rauchgas wird beim Durchströmen der Sekundärseite des Gas/-Gas-Wärmetauschers 4 die bereits angesprochene Wärmemenge entzogen. Dies führt zu einer Abkühlung des Rauchgases auf etwa 115° C. Mit dem Saug-Zug-Gebläse 14 wird das Rauchgas schließlich in den Kamin 16 gedrückt und von dort abgegeben.

Nach Figur 2 sind in einer Rauchgasleitung 18 einer zweiten Verbrennungsanlage der Reihe nach ein Gas/-Gas-Wärmetauscher 20, eine REA 22, eine Einrichtung 24 zur Adsorption von Schadstoffen, ein DeNOₓ-Katalysator 26 mit einer Ammonaikeindüsvorrichtung 28, ein Saug-Zug-Gebläse 30 und ein Kamin 32 angeordnet.

Beim Betrieb der Verbrennungsanlage strömt das zuvor entstaubte Rauchgas mit einer Temperatur von etwa 180° C primärseitig in den Gas/-Gas-Wärmetauscher 20 und wird dort auf eine Temperatur von rund 90° C abgekühlt. In der nachfolgenden REA 22 wird das Rauchgas so weit gereinigt, daß in ihm noch ein Schadstoffgehalt von etwa 50 mg/Nm³ Schwefeldioxid, von etwa 0,1 mg/Nm³ Quecksilber, von etwa 10 mg/Nm³ Staub, von etwa 500 mg/Nm³ Stickoxide und von etwa 5 ng/Nm³ Toxizitätsäquivalent enthalten ist. Das nunmehr nur noch etwa 65° C warme Rauchgas durchströmt den Gas/-Gas-Wärmetauscher 20 sekundärseitig und wird dabei auf eine Temperatur von im Ausführungsbeispiel etwa 150 °C aufgeheizt. Die dazu benötigte Wärmemenge wird dem primärseitig anströmenden Rauchgas entzogen.

In der folgenden Einrichtung 24 zur Adsorption von Schadstoffen wird der Schadstoffgehalt z. B. an Schwefeldioxid etwa um den Faktor 10, an Quecksilber etwa um den Faktor 2 und an Toxizitätsäquivalent etwa um den Faktor 50 gesenkt. Die Einrichtung 24 zur Adsorption von Schadstoffen ist in diesem Ausführungsbeispiel als solche mit Herdofenkoksschüttung 38 ausgebildet, also für Koks niederer Qualität.

Als gängige Einrichtung 24 kann zur Aufnahme der Herdofenkoksschüttung ein KWU-Sorptionsfilter (Prospekt S96000-S1914) eingesetzt werden. Der Herdofenkoks 38 als Adsorbermaterial für Schadstoffe stellt hierbei eine preiswerte Alternative gegenüber der Aktivkohle 34 dar. Aktivkohle 34 wie auch Koks 38 haben bekanntlich sehr große innere Oberflächen, mit denen sie u. a. auch die genannten Schadstoffe adsorbieren.

Dem so gereinigten, jedoch mit unverändertem Stickoxid in den DeNOₓ-Katalysator 26 einströmenden Rauchgas wird dort mittels der Eindüsvorrichtung 28 Ammoniak zugeführt. Die katalytische Umsetzung der Stickoxide im Rauchgas erfolgt - wie schon anhand des in Figur 1 gezeigten Ausführungsbeispiels erläutert wurde - an einer Schüttung von Katalysator-Pellets 40. Zur Aufnahme der Schüttung wird das gleiche KWU-Sorptionsfilter verwendet, wie es zur Aufnahme der Herdofenkoksschüttung 38 vorgesehen ist. Das KWU-Sorptionsfilter besitzt im Ausführungsbeispiel einen Querschnitt von 5 m mal 10 m. Die Katalysatorschüttung besitzt eine Höhe von etwa 1 m und ist damit um einen Faktor 5 niedriger als die Herdofenkoksschüttung 38.

Bei der Kontaktierung der Stickoxide und des Ammoniaks an den auf Titandioxid basierenden Katalysator-Pellets 40 werden katalytisch Stickstoff und Wasser gebildet. Dabei wird die Stickoxid-Konzentration im Rauchgas z. B. um etwa einen Faktor 7 auf nunmehr etwa 70 mm/Nm³ gesenkt. Das nun weitgehend von Schadstoffen befreite Rauchgas wird mittels des Saug-Zug-Gebläses 30 in den Kamin 32 gedrückt und von dort abgegeben.

In dem in Figur 2 dargestellten Ausführungsbeispiel kann in der Rauchgasleitung 18 in Strömung des Rauchgases nach dem DeNOₓ-Katalysator 26 noch ein weiterer (hier dicht dargestellter) Wärmetauscher vorgesehen sein, mit dem dem hier noch etwa 150° C warmen Rauchgas weitere Wärme entzogen wird, bevor das Rauchgas über den Kamin 32 an die Umgebung abgegeben wird.

Zur Aufnahme der Schüttung von Katalysator-Pellets 40 kann auch in diesem Ausführungsbeispiel ebenso ein Gegenstromadsorber anstelle des KWU-Sorptionsfilters als Einrichtung 24 vorgesehen sein.

## Patentansprüche

1. Rauchgas-Reinigungseinrichtung mit einer Einrichtung zur Adsorption von Schadstoffen im Rauchgas und mit einem DeNOₓ-Katalysator zur Verminderung von Stickoxiden, **dadurch gekennzeichnet**, daß die Einrichtung (6, 24) zur Adsorption von Schadstoffen einen Reaktor für eine Schüttung aus einem festen Adsorbermaterial umfaßt und dem DeNOₓ-Katalysator (10, 26) in Strömungsrichtung des Rauchgases in einer Rauchgasleitung (2, 18) vorgeschaltet ist, und daß der DeNOₓ-Katalysator (10, 26) konstruktiv wie ein Reaktor zur Aufnahme einer Schüttung aus einem festen Adsorbermaterial ausgebildet ist.

2. Einrichtung nach Anspruch 1, **dadurch gekennzeichnet**, daß in der Einrichtung (6, 24) zur Adsorption von Schadstoffen als Adsorbermaterial Aktivkohle vorgesehen ist.

3. Einrichtung nach Anspruch 1, **dadurch gekennzeichnet**, daß in der Einrichtung (6, 24) zur Adsorption von Schadstoffen als Adsorbermaterial Koks vorgesehen ist.

4. Einrichtung nach einem der Ansprüche 1 bis 3, **dadurch gekennzeichnet**, daß die Einrichtung (6, 24) zur Adsorption von Schadstoffen ein Gegenstromadsorber ist.

5. Einrichtung nach einem der Ansprüche 1 bis 4, **dadurch gekennzeichnet**, daß das Material des DeNOₓ-Katalysators (10, 26) in Form von Pellets oder als Granulat vorliegt.

6. Einrichtung nach Anspruch 5, **dadurch gekennzeichnet**, daß die Pellets einen Durchmesser von etwa 1 bis 20 mm und eine Länge von etwa 5 bis 50 mm aufweisen.

7. Einrichtung nach einem der Ansprüche 1 bis 6, **dadurch gekennzeichnet,** daß in einer Rauchgasleitung (2), die zur Einrichtung (6) zur Adsorption der Schadstoffe führt, primärseitig ein Gas/Gas-Wärmetauscher (4) angeordnet ist, der sekundärseitig an eine den DeNOₓ-Katalysator (10) verlassende Rauchgasleitung (2) angeschlossen ist. (Figur 1)

8. Einrichtung nach einem der Ansprüche 1 bis 6, **dadurch gekennzeichnet**, daß in einer Rauchgasleitung (18), die zur Einrichtung (24) zur Adsorption der Schadstoffe führt, ein Gas/Gas-Wärmetauscher (20) angeordnet ist, der primärseitig zwischen einem Staubfilter und einer REA (22) und sekundärseitig zwischen der REA (22) und der Einrichtung (24) angeordnet ist.

9. Einrichtung nach einem der Ansprüche 1 bis 8, **dadurch gekennzeichnet**, daß die Temperatur des Rauchgases während der Kontaktierung mit dem Adsorbermaterial und dem Material des DeNOₓ-Katalysators (10, 26) zwischen 100 und 250 °C liegt.

10. Einrichtung nach einem der Ansprüche 1 bis 9, **dadurch gekennzeichnet**, daß der Reaktor der Einrichtung (6, 24) zur Adsorption der Schadstoffe und ein Reaktor zur Aufnahme des Materials des DeNOₓ-Katalysators (10, 26) in gleicher Weise ausgebildet sind.
